# FASCICULE DE BREVET EUROPEEN

(11) **EP 3 338 048 B1**
(45) Date de publication et mention de la délivrance du brevet: **13.01.2021**
(21) Numéro de dépôt: 16770050.9
(22) Date de dépôt: 19.08.2016
(51) Int. Cl.: F28D 20/02

(54) **BLOC ET UNITE DE STOCKAGE D'UNE ENERGIE THERMIQUE**
BLOCK UND EINHEIT ZUR SPEICHERUNG VON WÄRMEENERGIE
BLOCK AND UNIT FOR STORING THERMAL ENERGY

(30) Priorité: 20.08.2015 FR 1557830
(43) Date de publication de la demande: 27.06.2018
(73) Titulaire: Hutchinson, 75008 Paris (FR)
(72) Inventeur: CHOPARD, Fabrice, 75008 Paris (FR); BLINE, Paul, 75008 Paris (FR); CHAUVET, Boris, 75008 Paris (FR); DOMINIAK, Christophe, 75008 Paris (FR)
(74) Mandataire: Ernest Gutmann - Yves Plasseraud S.A.S.
(86) Numéro de dépôt international: PCT/FR2016/052101
(87) Numéro de publication internationale: WO 2017/029464

(56) Documents cités:
- WO-A1-2012/112050
- DE-U1- 29 914 113
- JP-A- H07 229 690
- US-A- 5 086 493
- US-A1- 2011 030 915

## Description

La présente invention concerne :
- un bloc pour une unité d'(au moins) un stockage d'une énergie thermique,
- et une unité de stockage et de restitution de cette énergie.

Sont aussi concernés le stockage et la gestion thermique d'une boucle de circulation fluide, où circule un fluide frigorigène ou caloporteur.

Des dispositifs ont déjà été proposés pour assurer des fonctions de stockage d'énergie thermique.

US 2011/0030915 divulgue ainsi un tel dispositif comprenant :
- des éléments de stockage et de restitution d'une énergie thermique,
- une chambre de réception de ces éléments,
- au moins un passage de communication entre l'extérieur et la chambre, pour laisser entrer et sortir de ladite chambre un fluide frigorigène ou caloporteur à placer dans la chambre en échange thermique avec lesdits éléments,
- des éléments périphériques, dont certains au moins comprennent au moins une couche d'un matériau isolant thermique et d'autres au moins une couche d'un matériau à changement de phase (MCP), et qui sont disposés autour de la chambre.

Un double problème se pose encore lié à la réalisation industrielle et à l'efficacité opérationnelle de ces dispositifs.

Or, l'industrie est invitée à accélérer la mise sur le marché de nouvelles technologies pouvant réduire les émissions de polluants, lisser d'éventuelles augmentations ponctuelles de charges par rapport à un fonctionnement nominal dimensionnant, mais aussi proposer des solutions pour décaler dans le temps la restitution d'une énergie disponible à un autre moment.

Sur un moteur, ou dans un véhicule, la performance et la réduction substantielle des dimensions et/ou poids tant d'un système propre à contenir un fluide chaud que d'un système de refroidissement de ce moteur et/ou de certains composants du véhicule, sont ici apparues comme des passages majeurs pour favoriser l'atteinte des objectifs actuellement affichés, en liaison avec la consommation de carburant et la réduction des émissions de gaz polluants.

C'est dans ce contexte, et pour répondre à une partie au moins de ces requêtes, qu'est ici proposé un bloc modulaire selon la revendication 1, pour le stockage et la restitution d'énergie, le bloc comprenant, outre les caractéristiques précitées du dispositif selon US 2011/0030915, notamment une chambre ouverte sur un côté autre que celui du fond, par exemple pour y placer ou en retirer lesdits éléments de stockage et de restitution d'énergie thermique, une réalisation:
- où lesdits éléments périphériques sont des éléments de gestion thermique des chambres qui, sans contact avec aucun fluide caloporteur ou frigorigène, travaillent thermiquement en fonction desdits échanges réalisés dans les chambres, ce qui n'est pas le cas des tubes 2b dans US 2011/0030915,
- où ladite au moins une couche de matériau isolant thermique est disposée dans des poches sous atmosphère contrôlée et à feuilles flexibles ou à parois métalliques (manuellement déformables sous pression ambiante), et
- où lesdits éléments de stockage et de restitution d'énergie thermique sont non tubulaires et non disposés de façon organisée dans ladite chambre, et/ou lesdits éléments de stockage et de restitution d'énergie thermique sont disposés en vrac dans ladite chambre.

Ainsi, on associera une conception modulaire avec une possible réalisation en série et une performance énergétique que des résultats de tests ont montrées.

Il est précisé qu'un matériau à changement de phase -ou MCP-désignera tout matériau capable de changer d'état physique. Le stockage thermique peut s'opérer par utilisation de sa Chaleur Latente (CL) : le matériau peut alors stocker ou céder de l'énergie par simple changement d'état, tout en conservant une température et une pression sensiblement constante, celle du changement d'état.

Par « constitution PIV », on entend une structure sous atmosphère contrôlée contenant au moins un matériau isolant thermique a priori poreux.

Sous « atmosphère contrôlée » a pour sens remplie par un gaz ayant une conductivité thermique inférieure à celle de l'air ambiant (26mW/m.K) ou « sous vide d'air partiel », c'est-à-dire sous une pression inférieure à la pression ambiante (donc < 10⁵Pa). Une pression entre 10⁰Pa et 10⁴Pa dans l'enceinte pourra alors convenir.

Et « Poreux » désigne un matériau possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ont des tailles inférieures à 1 ou 2mm de façon à pouvoir garantir une bonne isolation thermique, et de préférence à 1 micron, et préférentiellement encore à 10⁻⁹m, pour des questions en particulier de tenue au vieillissement et donc de possible dépression moins forte dans l'enveloppe PIV.

Pour favoriser ce rôle de de gestion thermique des chambres, il est proposé que certaines au moins des poches sous atmosphère contrôlée contenant au moins une dite couche de matériau isolant thermique sont intégrées dans(avec) les parois extérieures, ou sont disposées autour desdites parois extérieures, en étant de préférence alors maintenues par une enveloppe périphérique qui les enserre.

Pour favoriser encore davantage la possible réalisation en série, le montage du bloc, sa maintenance, et son efficacité opérationnelle, il est proposé que le bloc précité comprenne en outre une surface de joint (avec donc un joint) entourant le côté ouvert de la chambre, pour assurer une étanchéité vis-à-vis du fluide.

Pour des raisons similaires, il est aussi proposé que le matériau MCP soit reçu dans au moins une cavité desdites parois extérieures, et/ou que ce(s) matériau(x) MCP soi(en)t disposé(s) dans lesdites poches, avec le(s) matériau(x) isolant (s) thermique(s).

Il est aussi proposé que le bloc comprenne une série de dites poches réunies par des portions flexibles, intermédiaires entre deux poches successives où celles-ci peuvent s'articuler l'une par rapport à l'autre, et qui pourront aussi être sous atmosphère contrôlée, typiquement via un scellement périphérique unique qui fera que les poches et lesdites portions intermédiaires communiqueront dans l'enveloppe étanche qui les entourera alors.

Ainsi, on facilitera l'industrialisation, l'approvisionnement, la mise en place, l'adaptation à diverses formes de blocs et la maintenance de la gestion thermique en périphérie du bloc.

Pour des considérations comparables, il est proposé que lesdites portions intermédiaires comprennent au moins une structure à matériau isolant thermique, flexible (ou déformable) et sous ladite atmosphère contrôlée, assurant ainsi une continuité d'isolation thermique entre deux poches.

De la sorte on associera possible articulation et performance thermique.

L'invention comprend aussi une unité de stockage et de restitution selon la revendication 10.

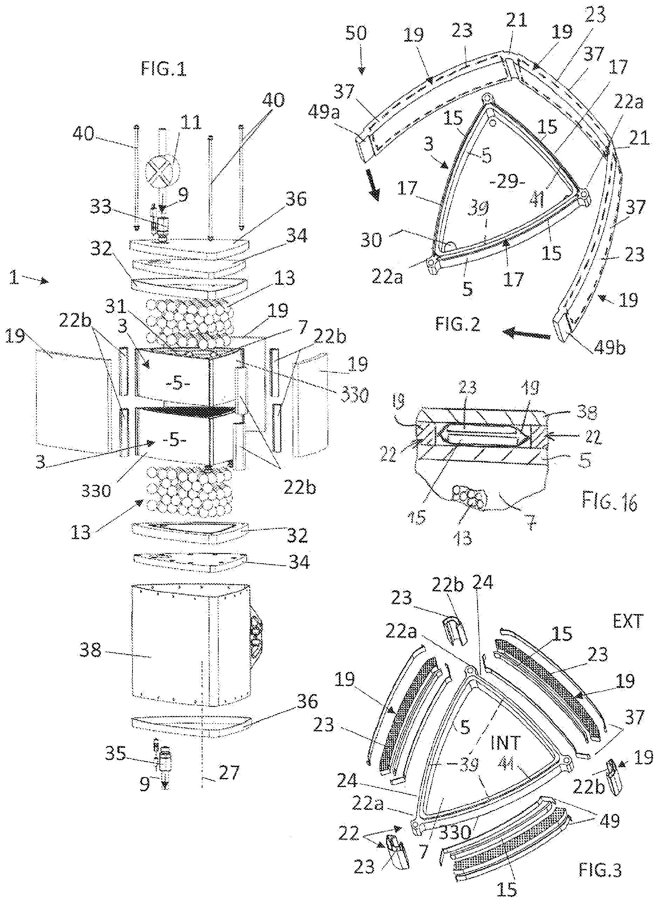

On y recommande la présence, pour les raisons précitées :
- de plusieurs blocs modulaires empilés, chacun comprenant :
   -- des éléments de stockage et de restitution de ladite énergie thermique comprenant au moins un matériau MCP,
   -- un corps comportant :
      --- une chambre de réception des éléments de stockage et de restitution de ladite énergie thermique, la chambre de réception étant définie à l'intérieur de parois extérieures du corps réunies par un fond fermant d'un côté la chambre, laquelle est ouverte sur un autre côté pour y placer ou en retirer lesdits éléments de stockage et de restitution de ladite énergie thermique,
      --- au moins un passage de communication entre les chambres, pour laisser entrer et sortir un fluide frigorigène ou caloporteur à placer dans les chambres en échange thermique avec lesdits éléments,
      --- de préférence une surface de joint entourant le côté ouvert de la chambre, pour assurer une étanchéité vis-à-vis du fluide (un collage ou soudage permettrait de se dispenser de joint),
- des moyens de fixation adaptés pour fixer ensemble les blocs,
- et des éléments de gestion thermique des chambres disposés autour desdites chambres et dont certains au moins comprennent au moins une couche d'un matériau isolant thermique (de préférence poreux et intégré à un panneau isolant sous vide ; PIV) et d'autres au moins une couche d'un matériau MCP et où :
   -- ladite au moins une couche de matériau isolant thermique est disposée dans des poches sous atmosphère contrôlée et à feuilles flexibles, ces poches isolant les chambres individuellement (bloc par bloc, comme fig.2 ou 3) ou globalement (comme fig.1).

Intégrer les poches à MCP dans les parois extérieures permettra de prévoir une fabrication par moulage, avec des corps en polymère, une standardisation accrue et une facilité et sécurité de mise en œuvre. Une disposition à l'extérieur, en périphérie, permettra une adaptation à certaines dimensions, voire aux contraintes de mise en place.

La référence à une paroi ou un corps en matériau moulable couvre tant les résines thermoplastiques chargées de fibres et injectées que les résines thermodurcissables imprégnant un tissu ou un mat, tel un tissé ou un non tissé.

Des tirants ou des collages ou soudages peuvent convenir pour lier ensemble axialement les blocs modulaires.

Une considération a aussi été de favoriser la circulation du fluide ainsi que les échanges thermiques dans chaque bloc.

Aussi est-il proposé que plusieurs blocs modulaires soient empilés suivant un axe, et que chaque bloc comprenne un passage de communication traversant le fond de sa chambre, pour laisser le fluide circuler d'une chambre à une autre, deux passages successifs étant décalés d'un passage au suivant parallèlement audit axe, pour définir des chicanes.

Un avantage de la solution modulaire ici présentée est de pouvoir adapter les positions relatives des blocs afin de satisfaire au mieux au contexte. Il est ainsi possible que l'on ait nécessité de disposer deux blocs adjacents avec leurs chambres face à face ou dos à dos, par exemple.

On attend aussi de la solution une modularité permettant de s'adapter aux exigences de chaque cas d'implantation, une performance énergétique élevée, une fabrication possible en série, et un coût de revient compatible avec une telle fabrication adaptée au domaine automobile.

A ce sujet, on conseille que le corps de chaque bloc modulaire soit monobloc.

Et pour favoriser la circulation du fluide en situation opérationnelle, il est prévu que l'unité comprenne en outre des moyens de mise en circulation du fluide pour qu'il circule (de façon forcée) dans les chambres et dans un circuit extérieur auxdits blocs.

A nouveau pour parfaire l'isolation thermique et favoriser encore la fabrication en série, il est par ailleurs proposé que certains au moins des éléments de gestion thermique comprenant un matériau MCP soient disposés dans lesdites poches avec le matériau isolant thermique ; ceci permettant de prévoir une réalisation sous forme d'un panneau PIV et/ou un conditionnement pratique, y compris si cette enveloppe devait être intégrée dans lesdites parois extérieures des corps.

Il est aussi proposé que les corps soient empilés ensemble, de façon qu'extérieurement lesdites parois extérieures définissent des appuis contre lesquels seront alors appliqués les panneaux PIV, lesquels seront bloqués latéralement par des excroissances, ou entretoises, qui maintiendront un espace ayant sensiblement l'épaisseur desdits panneaux PIV, entre les parois extérieures des corps et l'enveloppe extérieure (qui pourra être amovible).

Ceci alliera modularité / performance énergétique élevée / adaptabilité / facilité de maintenance / structuration mécanique.

Une facilité de mise en place et une optimisation des surfaces d'échange associées à une gestion thermique optimisée peuvent également être visées.

C'est ainsi qu'il est proposé que les éléments de stockage et de restitution de l'énergie thermique, qui se présentent donc comme des éléments individualisés, tels des billes ou des cartouches, soient disposés en vrac dans les chambres, en réservant entre eux des espaces de circulation pour le fluide.

A contrario, le matériau MCP des éléments de gestion thermique disposés autour desdites chambres formera favorablement un ou plusieurs panneaux qui travailleront donc, sans contact avec aucun fluide, en fonction de ce qui se passera thermiquement dans ces chambres, là où les multiples éléments MCP individualisés favoriseront le temps de séjour du fluide.

Appliquer la solution à bloc fonctionnel présenté ci-avant aura par ailleurs tout sens sur un circuit de lubrification d'un moteur définissant un chemin de circulation d'un lubrifiant (typiquement de l'huile) sur lequel sont disposés, en communication fluide, des organes fonctionnels du moteur à lubrifier, un carter de lubrifiant (même si le réservoir est ailleurs, comme dans un carter sec), ce carter définissant, ou contenant, une unité ou au moins un dit bloc modulaire comme précité(e), chacun(e) présentant tout ou partie des caractéristiques ci-avant présentées.

Dans ce cadre, il est même prévu une application privilégiée (car intégrée) où :
- les organes fonctionnels du moteur seront situés dans un bloc moteur,
- et le carter de lubrifiant sera vissé au bloc moteur, sous lui, et du lubrifiant pourra y circuler pour être réchauffe ou refroidi via les caractéristiques du ou des dit(s) blocs disposé(s) là.

Réaliser un réservoir de lubrifiant de véhicule pouvant permettre de réchauffer du lubrifiant alors que la température extérieure est froide, par exemple 5 à 10°C, et que le véhicule est à l'arrêt à cette température depuis par exemple 6 à 8 heures était un défi.

Pour le surmonter, il est proposé un carter de lubrifiant :
- soit contenant ledit bloc, comme le carter selon la revendication 8,
- soit défini par le bloc précité avec tout ou partie de ses caractéristiques (où les parois extérieures du bloc réunies par ledit fond sont donc ceux de ce carter, comme dans le cas du carter selon la revendication 7),
- avec, dans les deux cas, le bloc qui contiendra ainsi lesdits éléments de stockage et de restitution d'une énergie thermique, à placer en échange thermique avec du lubrifiant à faire circuler dans ladite chambre via une pompe.

Dans les deux cas, on prévoira avantageusement que, circulation du lubrifiant à l'arrêt, lesdits éléments de stockage et de restitution d'énergie baignent dans un premier volume de lubrifiant (V1) à l'extérieur (typiquement au-dessus) duquel s'étendra un second volume de lubrifiant (V2) inférieur au premier.

De la sorte, le premier volume de lubrifiant (V1) étant plus chaud que le second (V2), car le(s) MCP(s) desdits éléments (chauds à la fin du fonctionnement précédent du bloc moteur pourvu dudit carter de lubrifiant) l'aura(ont) chauffé au moment du démarrage d'un nouveau cycle (après l'arrêt précité par temps froid), le lubrifiant total en circulation (V1+V2) sera rapidement globalement chaud, avec des avantages en termes de rendement du moteur à lubrifier et de limitation des polluants.

En liaison avec ce qui précède est aussi concerné un ensemble comprenant un bloc moteur auquel le carter de lubrifiant précité sera vissé, sous lui et qui sera en communication fluide avec lui, pour la circulation du lubrifiant.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :
- la figure 1 schématise une unité stockeur/échangeur, avec une alternative figure 15,
- les figures 2,3 montrent un module de l'unité, dans deux réalisations possibles, en éclaté,
- les figures 4 à 10 et 11 schématisent différents exemples de réalisation de poches PIV, ou mixtes MCP/PIV, en coupe ; on doit imaginer que la bande continue latéralement figures 6-8, ainsi que figure 10 avec la paroi latérale (5 ci-après), et que ces poches (avec leurs zones de liaison 21 si elles existent) sont fermées sur tous leurs côtés (tels qu'en zones 49a,49b ci-après) pour permettre le vide interne partiel,
- la figure 10 schématise aussi une intégration de telles poches et zones de liaison 21 dans l'épaisseur d'une dite paroi latérale 5,
- la figure 11 schématise aussi un corps de module à chicanes internes,
- les figures 12-15 schématisent trois montages, sur un circuit d'huile,
- la figure 16 montre des entretoises de mise en place desdites poches et la figure 17 une possible poche métallique.

Il doit être considéré que les exemples de solutions opérationnelles présentées ci-après et les versions illustrées peuvent se combiner entre elles. Des mélanges de solutions peuvent ainsi en être aisément déduites, comme par exemple figure 2 une absence d'excroissance 22a sur un corps 330, ou une absence de liaisons 21 entre les poches 19.

Les schémas des figures (notamment figure 1) représentent donc tout ou partie d'une unité 1 de stockage, et favorablement de restitution ultérieure, d'une énergie thermique apportée par un fluide 9 frigorigène ou caloporteur.

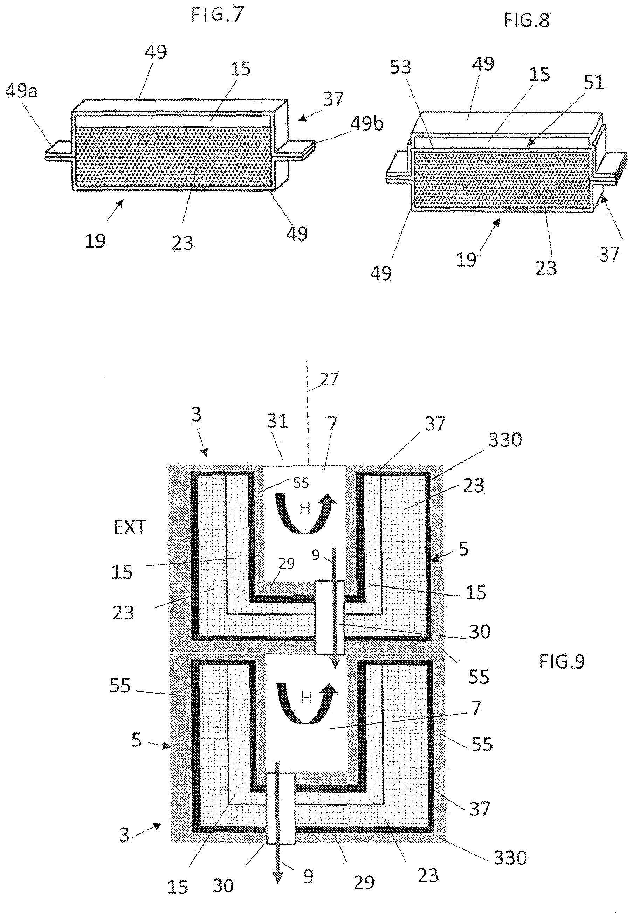

De construction modulaire, l'unité 1 comprend :
- plusieurs structures ou modules 3, chacun pourvu d'un corps 330 ayant une paroi périphérique 5 et un fond 29 entourant un volume intérieur (ou chambre) 7 où sont présents le fluide 9 frigorigène ou caloporteur, à faire circuler dans lesdits volumes sous l'action de moyens 11 de circulation, et des éléments 13 de stockage et de restitution (ultérieure) d'une énergie thermique,
- au moins une couche ou élément 15 contenant un matériau MCP qui peut être disposée dans la paroi périphérique 5 (par exemple dans au moins une cavité (quasi) périphérique 17 de cette paroi, comme montré figure 2) ou autour de ladite paroi périphérique, en particulier dans la ou les enveloppes 37 des figures 7,8, notamment,
- des éléments 19 à matériau thermiquement isolant 23 et de préférence sous atmosphère contrôlée disposés latéralement autour de chaque volume 7, individuellement (figure 2) ou par groupe (figure 1).

Les modules 3 sont disposés suivant un axe d'empilement 27. Et chaque fond 29 est transversal à la paroi périphérique 5 (en en réunissant les côtés) et ici opposé, suivant l'axe 27, à une ouverture 31 par laquelle on peut placer ou retirer du volume 7 correspondant les éléments 13 qui peuvent être des billes ou des sphères.

Comme montré figure 3 ou 16, des excroissances 22 de maintien fixées avec la/les parois périphériques 5 peuvent être prévues, notamment dans les angles des parois extérieures formant la paroi périphérique 5, deux excroissances délimitant entre elles, latéralement et autour de la paroi périphérique, un espace 24 ouvert où est disposé l'un au moins des éléments 19 isolants thermiques sous atmosphère contrôlée.

A ce sujet, le mode de réalisation de la figure 2 prévoit une alternative où les poches 19 sont toujours individuelles mais ne sont plus indépendantes les unes des autres. Il s'agit d'une série de telles poches 19 à constitution PIV, c'est-à-dire sous atmosphère contrôlée, réunies par des portions intermédiaires 21 où deux poches successives peuvent s'articuler l'une par rapport à l'autre. Ainsi, deux poches 19 successives sont écartées l'une de l'autre par la portion intermédiaire 21 correspondante, comme illustré.

Chaque poche contiendra au moins un matériau isolant thermique 23, et s'étendra latéralement (transversalement à l'axe 27) autour d'un volume 7 (de préférence tout autour), pour l'isoler thermiquement de l'extérieur (EXT) avec son contenu, les couches 15/23 définissant des éléments de gestion thermique de la température dans les volumes 7.

La, ou chaque, couche 15 contenant un matériau MCP peut être disposée dans la ou les cavités quasi périmétriques 17 de la paroi 5 ou tout autour de cette paroi, en particulier à l'intérieur des poches 19.

Dans cette solution à poches 19 disposées latéralement autour de la paroi 5, une enveloppe périphérique (manchon ou fourreau) 38 de protection mécanique ouvert aux deux extrémités, par exemple en plastique dur, enveloppe les modules 3, les pièces 32,34,36 et les poches 19, lesquelles sont donc interposées entre les parois 5 et ce fourreau. S'étendant autour des excroissances 22 et des éléments isolants thermiques sous atmosphère contrôlée 19, le manchon 38 participe au maintien des éléments 19 dans les espaces 24, comme montré figure 3.

Les excroissances de maintien 22 pourront être en plusieurs parties. Ainsi voit-on notamment figure 3 une solution où elles sont en deux parties 22a,22b. La partie 22b est amovible et peut se fixer, par des coopérations de formes entre elles, avec la partie 22a qui est monobloc avec la paroi périphérique 5, en périphérie extérieure de celle-ci. Les parties amovibles 22b peuvent chacune se présenter comme un clip ou un embout à engager par déformation élastique forcée, ou par coulissement latéral, autour de la partie fixe 22a. Ces parties de maintien 22b peuvent être thermiquement isolantes et renfermer pour cela une couche 23 en matériau isolant thermique (qui peut donc être sous atmosphère contrôlée , comme une poche 19).

Typiquement, les corps 330 des modules 3 présenteront des angles et les excroissances de maintien 22 se présenteront comme des baguettes s'étendant dans les angles, comme illustré.

A l'inverse de ce qui précède, plutôt que d'être donc creuse comme un clip, la partie amovible 22b pourrait présenter une saillie vers un creux extérieur de la partie fixe 22a pour coopérer avec elle. Autre possibilité : les deux parties 22a,22b n'en formerait qu'une pour définir une excroissance monobloc avec la paroi 5.

Les parois périphériques 5 et fonds 29 des modules ou structures 3, qui peuvent être monoblocs, pourront notamment être en polyamide, en autre polymère rigide (polyéthylène moyenne ou haute densité, par exemple), ou en composite (chargée de fibres), voire en métal.

Des passages 30 communiquant au moins deux à deux, dans les fonds 29, permettent au fluide 9 (qui peut être de l'eau ou de l'huile, voire un gaz, tel de l'air), de circuler, depuis une entrée 33 jusqu'à une sortie 35, entre les modules ou structures 3. Ce fluide 9 va globalement circuler suivant l'axe 27.

Là où cela est nécessaire, dès lors que les structures ouvertes 3 peuvent être disposées notamment dos à dos (figure 1) ou au contraire face à face, un ou plusieurs couvercles 32, ici deux doubles, ferment les ouvertures 31 des modules extrêmes, de façon à étancher chaque volume 7. Extérieurement, chaque couvercle 32 peut être doublé par une poche unique 34 sous atmosphère contrôlée. Et une plaque 36 de protection mécanique peut fermer le tout, suivant l'axe 27, comme illustré.

Les entrée 33 et sortie 35, qui traversent les pièces 32,34,36 si elles existent, pour déboucher dans les volumes 7 respectifs, définissent des éléments de connectique comme montré figure 1.

Encore pour l'étanchéité vis-à-vis du fluide 9, une première surface de joint 39 (pouvant être pourvue d'un joint 41) entoure l'ouverture 31 de chaque chambre 3, laquelle ouverture est alors située transversalement à l'axe 27, à l'opposé du fond 29.

Des moyens de fixation 40, tels des tirants axiaux, seront par ailleurs de préférence prévus pour venir en prise avec les corps des modules 3 afin d'assurer une fixation entre ces corps placés en contact et en regard. Après cela, le manchon 38 sera extérieurement mise en place.

Les corps 330 étant fixés ensemble, suivant l'axe 27 dans la disposition empilée considérée, la première surface à joint 39 sera donc plaquée soit contre une seconde surface de joint définie extérieurement à l'endroit du fond 29 d'un corps adjacent, dans une disposition relative des corps dos à dos, soit contre la première surface de joint d'un tel corps adjacent, dans une disposition relative des corps face à face. Au moins un joint (non représenté) sera disposé d'un côté et/ou de l'autre.

En place des tirants et joints, on peut prévoir une solution soudée ou collée des modules entre eux, suivant l'axe 27.

On aura compris que l'ensemble 1 sera thermiquement performant grâce à son complexe MCP/isolant thermique qui permet d'associer :
- une isolation thermique des modules vis-à-vis de l'extérieur (EXT),
- à un effet retardateur lié aux changements d'états du/des matériaux MCP.

Le matériau thermiquement isolant 23 pourra être une laine de verre, une mousse de polyuréthane ou de polyisocyanurate, ou encore plus favorablement un matériau poreux, voire nano-poreux, tel qu'une silice ou un aérogel organique ou son pyrolat imprégné dans un réseau poreux et disposé dans une enceinte sous vide, pour définir donc au moins le panneau isolant sous vide PIV déjà évoqué.

En tant que matériau 15, ou constitution des éléments 13 contenus dans chaque volume intérieur 7 et avec lesquels le fluide 9 vient en échange thermique, on pourra prévoir une composition de caoutchouc telle que décrite dans EP2690141, à savoir une composition réticulée à base d'au moins un élastomère silicone « RTV » vulcanisé à température ambiante et comprenant au moins un matériau à changement de phase (MCP), ledit au moins un élastomère silicone présentant une viscosité mesurée à 25°C selon la norme ISO 3219 qui est inférieure ou égale à 5000 mPa.s. Dans cette composition, la matrice élastomère sera majoritairement constituée (i.e. selon une quantité supérieure à 50 pce, de préférence supérieure à 75 pce) d'un ou de plusieurs élastomères silicones « RTV ». Ainsi, cette composition pourra avoir sa matrice élastomère comprenant un ou plusieurs élastomères silicones selon une quantité totale supérieure à 50 pce et optionnellement un ou plusieurs autres élastomères (i.e. autres que des silicones « RTV ») selon une quantité totale inférieure à 50 pce.

Notamment un matériau à base de paraffine, d'acide gras eutectique (myristique-caprique) ou de sel hydraté eutectique (chlorure de calcium + potassium) pourrait aussi être utilisé en tant que matériau constitutif, seul ou non, des éléments précités. En autre alternative, le matériau MCP des éléments cités pourrait être à base d'acide gras, de paraffine, ou de sel eutectique ou hydraté. De fait, le choix du matériau et son conditionnement dans chaque élément concerné, en particulier sa dispersion au sein d'une matrice polymère, dépendra de l'application prévue et des résultats attendus.

A priori les éléments 13, ici individualisés, telles les sphères évoquées, seront disposés en vrac dans les volumes 7. Le rapport taille des structures individualisées / dimensions de chaque sous-volume sera alors défini en conséquence, afin de préférence d'optimiser les surfaces d'échange éléments 13 / fluide 9.

Ainsi, les éléments 13 à MCP ne seront pas des tubes ni ne seront disposés de façon organisée (comme ils le sont dans US 2011/0030915), afin de favoriser les conditions de mise en œuvre (pas de rangement) et les temps de séjour du fluide dans les chambres, en échange avec ces éléments 13, notamment en favorisant une circulation avec de nombreux méandres du fait des obstacles constitués par lesdits éléments 13 en travers de la circulation axiale 27 du fluide.

Autant il est important que les éléments 13 à MCP échangent largement avec le fluide 9, autant le matériau MCP 15 des éléments (15,19,23) de gestion thermique disposés autour des chambres ou volumes 7 devra former un ou plusieurs panneaux (structure périphériquement continue ou non comme on le voit sur les figures, notamment 2,3,11) qui, sans contact avec aucun fluide caloporteur ou frigorigène, travailleront thermiquement en fonction desdits échanges réalisés dans les chambres.

C'est en cela que le matériau MCP 15 des éléments périphériques est dit « de gestion thermique » : il participe à la gestion thermique des chambres. Ce n'est pas le cas des tubes 2b dans US 2011/0030915.

Ainsi, périphériquement disposé autour des chambres ou volumes 7, ce matériau placé dans son(ses) enveloppes déformables ou flexibles, telle(s) 37,51, formera favorablement une ou plusieurs parois ou panneaux 19 de gestion thermique .

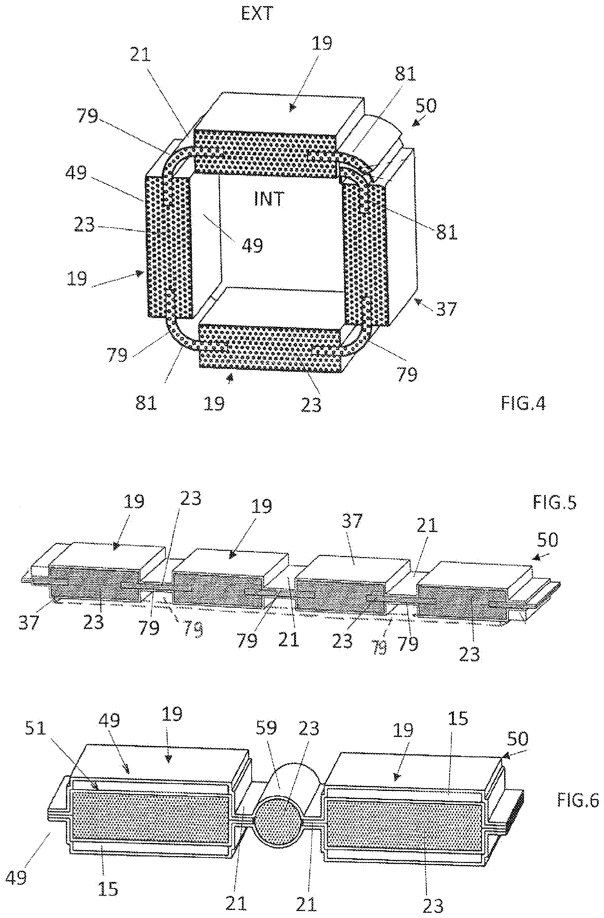

Si les poches isolantes périphériques 19 se succèdent de façon continue autour d'une paroi 5, et bien que ceci ne soit pas strictement imposé (une forme fermée sur elle-même, comme un manchon étant possible), il sera a priori préféré que les éléments 19-21 définissent ensemble un panneau articulable 50 (comme figures 2,4-6) pouvant :
- typiquement dans un état opérationnel, être fermé sur lui-même (figure 4, où la structure 50 est à imaginer à disposer ainsi autour d'une paroi 5 à isoler),
- et être déployé sensiblement à plat, par exemple pour être stocké et dans un état qui peut être non opérationnel (figure 5 ou 6).

Indépendamment d'une réalisation discontinue ou non des poches 19, ce qui suit présente, en référence notamment aux figures 3 et 5-8 une réalisation favorable de ces poches et des portions intermédiaires 21 si elles existent. Ainsi, même si seule une poche 19 est montrée, il suffit de reproduire le modèle ensuite de part et d'autre pour continuer la structure, si souhaité.

On peut ainsi constater qu'en solution tant continue que discontinue, chaque poche 19 sous atmosphère contrôlée pourra comprendre alors (comme on le retrouve en vue éclaté figure 3) :
- au moins un premier élément, ou une première couche, 15 contenant le matériau MCP, à côté (opérationnellement à l'extérieur) duquel est disposé un second élément constitué dudit matériau isolant thermique 23, et
- au moins une enveloppe extérieure 37 fermée qui contient les premier et second éléments et est constituée d'au moins une feuille 49 flexible étanche au matériau MCP, avec :
   -- a) soit ladite feuille flexible 49 qui est en outre scellable (thermiquement/chimiquement, en 49a,49b autour de la poche) et étanche au matériau poreux 23 et à l'air (voire aussi à l'eau), de sorte qu'un vide d'air régnant dans l'enveloppe 37, un dit panneau isolant sous vide (PIV) est ainsi défini, comme montré figure 7,
   -- b) soit le second élément isolant thermique 23 contenu à l'intérieur d'une seconde enveloppe fermée 51 à feuille flexible 53 scellable et étanche au matériau poreux et à l'air (voire aussi à l'eau), de sorte qu'un vide d'air régnant dans la seconde enveloppe, un dit panneau isolant sous vide (PIV) est ainsi défini, comme montré figure 8.

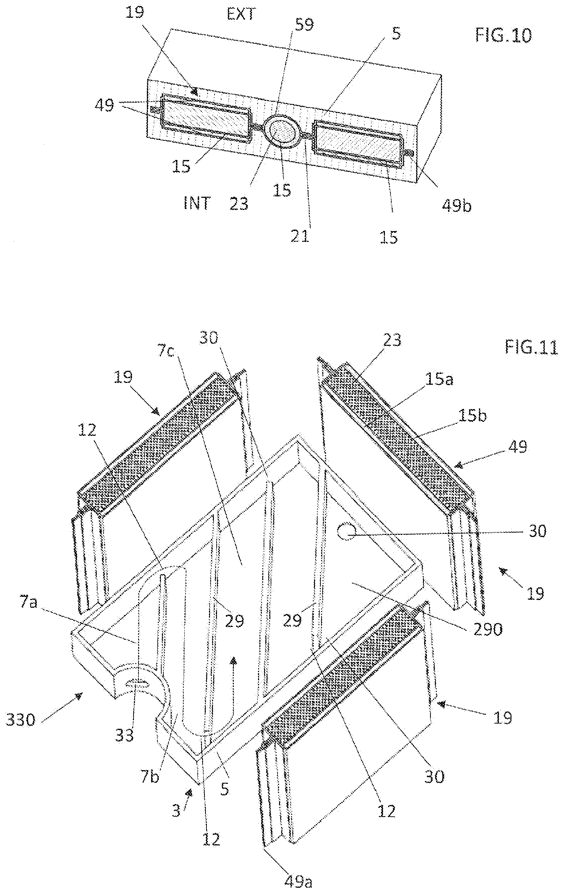

A noter que deux couches 15 (ou 15a,15b) contenant un ou plusieurs matériaux MCP pourraient (comme figure 6 ou 11) être disposées de part et d'autre de la couche de matériau poreux 23, voire aucune telle couche, si elle prévue uniquement dans la paroi 5, comme figure 2.

L'isolant thermique poreux 23 qui pourra donc être à nanostructure, sera donc confiné dans une feuille flexible 49 ou 53 qui ne laissera passer ni les vapeurs d'eau ni les gaz. Le PIV obtenu sera vidé de son air pour obtenir par exemple une pression de quelques millibars, puis pourra être scellé. Typiquement, la conductivité thermique λ d'un tel PIV sera de 0.004/0,008 W/m.K. L'utilisation de panneaux isolants sous vide devrait permettre d'atteindre une résistance thermique R = 5 m².K/W avec seulement 20 mm d'isolant.

Une possible composition du matériau 23 est la suivante : 80-85 % de dioxyde de silice (SiO2), 15-20 % de carbure de silicium (SiC) et possiblement 5 % d'autres produits (liant/charges). Une épaisseur de 0.4 à 3 cm est possible. Des exemples, pouvant ici s'appliquer, de panneau PIV et de matériau super-isolant sont en outre fournis dans PCT/FR2014/050267 et dans WO2014060906 (matériau poreux), respectivement.

Les solutions présentées ci-avant doivent permettre, dans un volume et poids acceptables notamment par des constructeurs aéronautiques ou automobiles, un stockage rapide d'une énergie thermique disponible au bout d'environ 6-10 minutes, le maintien de cette énergie pendant 12 à 15 heures, avant sa restitution rapide, typiquement quelques minutes (en particulier moins de 2-3mns), par exemple à un moteur lors d'une phase de démarrage à froid.

Les feuilles flexibles 49,53 du panneau PIV pourront typiquement être réalisées sous la forme d'un film multicouche comportant des films polymère (PE et PET) et de l'aluminium sous forme par exemple laminée (feuille d'épaisseur de l'ordre d'une dizaine de micromètre) ou métallisée (dépôt sous vide d'un film de quelques dizaines de nanomètre). La métallisation peut être effectuée sur une face ou sur les deux faces d'un film PE et plusieurs films PE métallisés peuvent être complexés pour former un film unique. Exemple de conception du film : - Scellement intérieur PE, environ 40 µm - Métallisation sous vide Al, env. 0.04 µm - Couche extérieure PET, environ 60 µm.

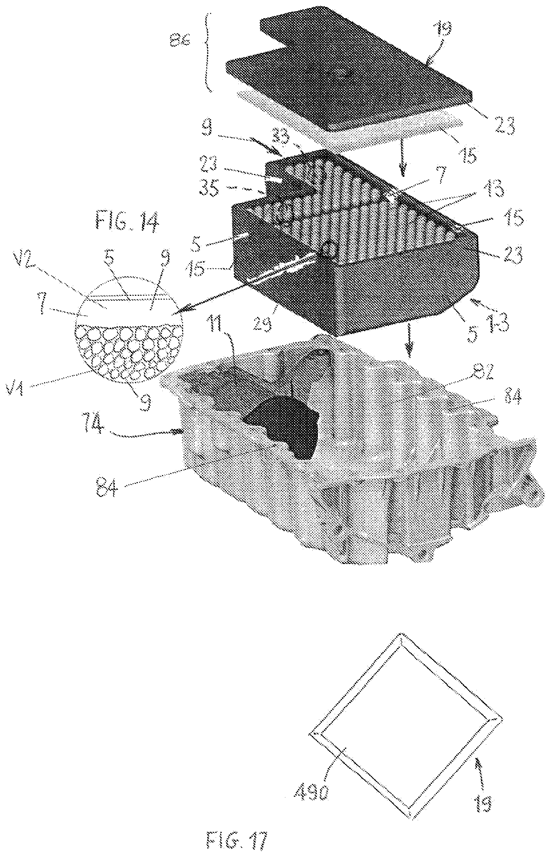

Si les repères 49 et/ou 53 désigne(nt) une(des) paroi(s) ou plaque(s) métallique(s), voir aussi poche 19 à parois métalliques 490 figure 17, on considérera alors une épaisseur de paroi inférieure ou égales à 3mm, et typiquement des épaisseurs comprises entre 0,07mm et 3mm. On pourra alors notamment choisir des matériaux dans le groupe comprenant l'acier inoxydable, l'aluminium et d'autres métaux à conductivité thermique inférieure à 300 W/m.K, permettant ainsi :
- de confondre les conductivités thermiques globale de la pièce et intrinsèque des plaques, car la diffusion thermique et les pertes thermiques seront alors faibles,
- et de satisfaire à des exigences de tenue mécanique comparables à celles de carters d'huile à paroi pleine en aluminium d'épaisseur 7mm.

Dans le cas b) ci-avant où il y a une double feuille : intérieure 53 et extérieure 49, la feuille 49 pourra par contre n'être donc qu'un simple film polymère, tel un PE de 0.05 à 0.2 mm d'épaisseur, l'objet de cette feuille extérieure 49 pouvant alors n'être que de créer un simple sac pour contenir/réunir ensemble les éléments ou matelas 15 et 23.

A noter aussi que la/chaque enveloppe 37,51 pourra être typiquement formée de deux feuilles ou parois disposées de part et d'autre du/desdits éléments à matériau 15 et 23 et réunies ensemble, comme en 49a,49b figures 2,7 ou 10 (seules figures où ces repères sont marqués).

Quoi qu'il en soit, un avantage de ces feuilles, directement en contact l'une avec l'autre à l'endroit des portions intermédiaires 21, comme illustré, si elles sont plusieurs, (ou de cette feuille si elle est unique) est qu'on pourra tirer parti de leur continuation physique à l'endroit de ces portions 21 pour y créer une zone d'articulation (toutefois figée s'il y a intégration dans l'épaisseur de la paroi 5, comme figures 9 ou 10, sans rupture du vide créé par la constitution PIV.

Toutefois, l'utilisation simple de cette ou ces feuilles ou parois flexibles (ou manuellement déformables) créera une discontinuité d'isolation thermique entre les deux poches consécutives 19 ainsi réunies.

Dans certains cas, les portions intermédiaires 21 pourraient présenter des surfaces non négligeables d'autant plus gênantes en termes de ponts thermiques ; mais on peut aussi avoir à placer un panneau 50 ou un manchon 47 en appui, par exemple pour le positionner correctement par rapport à son environnement.

D'autant plus dans ces cas, on pourra trouver un intérêt à ce qu'une portion renflée 59 soit définie entre deux zones d'articulation 21 (chacune formée par la ou les feuilles flexibles précitées appliquées l'une contre l'autre), chaque zone étant elle-même réunie latéralement d'un côté à la poche 19 concernée, ceci de façon régulière ou non dans la chaîne, comme montré figures 6 ou 10.

Chaque portion renflée 59 pourra contenir un isolant thermique 23, par exemple en rouleau (blanket en anglais). Il peut par exemple s'agir du produit souple, en rouleau, dénommé Spaceloft®, un isolant SIPA (Super Isolant à Pression Atmosphérique) proposé par la société ISOLProducts avec une conductivité thermique: λ = 0,01 à 0,02 W/m.K. Une couche MCP 15 (figure 10) pourra aussi être contenue, chacune de ces portions 59 étant donc favorablement enveloppé dans la/les feuilles flexibles précitées (pour maintenir une constitution PIV). Ces portions renflées 59 présenteront favorablement une surface extérieure convexe, permettant notamment un appui contre des surfaces extérieures complémentaires concaves.

Malgré tout, dans cette solution à portion(s) renflée(s) 59, les portions intermédiaires 21 ne sont pas totalement thermiquement isolantes.

Aussi, propose t'on (comme schématisé figure 5) que les portions intermédiaires 21 soient définies par au moins une structure 79 à matériau isolant thermique 23 (de préférence poreux pour être donc intégrée à la structure PIV globale), assurant une continuité d'isolation thermique entre lesdites deux poches. Le matériau isolant pourra être identique au matériau isolant thermique poreux des poches ; idem pour celui des zones 59.

Dans l'exemple de la figure 5, le matériau poreux (ici en forme de plaque) de chaque structure flexible 79 qui s'étend suivant l'épaisseur entre la(les) feuille(s) flexible(s) 49 de l'enveloppe 37, s'interrompt dans le matériau isolant thermique poreux 23 qui remplit les poches 19. Il pourrait toutefois y avoir continuité, comme schématisé par les pointillés continus 79 dont la structure flexible qu'ils schématisent remplacerait celle discontinue illustrée.

Plus épaisses que les tissus imprégnés et les portions 21, par exemple plus de 2.5 à 3 fois plus épaisses, et par exemple formées en bloc, comme schématisé, les poches 19 à matériau isolant thermique 23 seront typiquement plus rigides que les structures flexibles d'articulation 79.

L'isolant thermique de la/des structures 79 sera typiquement différent de celui des poches 19, par exemple de type souple en rouleau (blanket en anglais ; voir ci-après).

Pour que le panneau 50 ainsi formé acquière sa constitution PIV, sous vide partiel, on procédera bien sûr à une telle mise sous vide, avec scellement, après que les couches ou plaques de matériaux poreux 23,81 aient été toutes enveloppées par la ou les feuilles étanches flexibles 49.

Pour réaliser les structures 79, on pourra en particulier utiliser un support flexible en maillage polymère (par exemple un tissé, non tissé organique ou inorganique, ou une nappe) tel un polyester ou un polyamide de quelques mm d'épaisseur imprégné d'un aérogel 81, par exemple de silice, ou sa version pyrolysée (aérogel pyrolysé, étant précisé que cette alternative pyrolysée s'applique à chaque cas de la présente description où un matériau poreux thermiquement isolant est concerné).

Pour information, une structure d'isolation présentée ci-avant à poches PIV 19 avec pour matériau cœur un aérogel nano-poreux ou sa version pyrolysée pourra présenter une conductivité thermique inférieure à 10mW.m-1.K-1 pour une pression interne de 2 à 5 à 10⁻³ Pa. La dépression dans les poches, voire les portions 21, pourra être celle habituelle des PIV : 10⁻³ à 10³ Pa.

En liaison avec notamment les figures 6,8,10, on notera encore, comme déjà mentionné, qu'il pourra être avantageux que certaines au moins des poches sous atmosphère contrôlée et/ou des zones de portions intermédiaires contiennent au moins un matériau MCP, ce matériau 15 étant identique à ou différent de celui des éléments 13 à matériau MCP.

S'il y a deux couches de ce matériau, la seconde couche sera, là où les deux couches existent, disposée autour de la première couche, avec interposition entre elles du matériau 23 et des températures de changement d'état différentes.

S'il n'y a qu'une seule couche de ce matériau 15, elle sera donc favorablement entourée par la couche de matériau 23, à l'endroit des poches 19, et par le matériau 81 si les portions intermédiaires flexibles 21 en sont pourvues. Sur plusieurs figures, on a d'ailleurs marqué INT le côté du volume 7 et EXT l'(environnement) extérieur.

Il est aussi à noter que les poches 19 ne seront pas nécessairement strictement planes. Ainsi, une forme courbe est possible, comme dans l'exemple de la figure 3.

Comme schématisé figures 9,11, on notera encore que, pour favoriser les échanges thermiques dans les chambres 7, et donc le rendement de l'unité 1, on préfèrera que des chicanes 12 soient créées dans l'unité 1, de sorte que le fluide 9 y circulant y suive un chemin qui serpentera.

La figure 11 permet de comprendre que de telles chicanes 12 puissent être formées par le fait que chaque paroi transversale 29 et son passage traversant 30 forment un ralentisseur à la libre circulation du fluide entre son entrée 33 et sa sortie 35.

De préférence, en alternative ou compléments aux parois 29, les passages 30 entre les corps seront favorablement décalés d'un passage au suivant, parallèlement à l'axe 27, comme schématisé figure 9, pour l'effet chicanes.

Dans la variante de la figure 11, on a imaginé un module 3 unique à corps 330 unique, avec par exemple une entrée latérale 33 à travers une zone de sa paroi périphérique 5. Les chicanes 12 sont (essentiellement) créées ici par les cloisons internes 29 qui, à l'intérieur de l'espace 7 délimité par la paroi périphérique 5 et le fond percé 290, scindent cet espace en sous-volumes 7a,...7c.

Chaque cloison 29 s'interrompant à l'une de ses extrémités latérales avant d'atteindre la paroi 5, c'est là qu'est créé chaque passage 30 qui, en liaison avec la cloison concernée et de préférence une alternance dans l'extrémité latérale ainsi ouverte, forme une chicane. Arrivé au dernier sous-volume, le fluide sort du corps par le fond percé. Chaque sous-volume contient des éléments 13.

Dans les deux cas (figures 9 et 11), la circulation du fluide est donc sensiblement suivant une succession de S (voir flèche figure 11).

La figure 9 permet également de conforter le fait que certains au moins des éléments de gestion thermique pourront, placés dans les poches 19 (non représentées), être intégrés dans les parois extérieures 5 des corps (c'est-à-dire formant une seule pièce avec elles), même si les poches ne sont pas représentées sur la figure ; seules le sont les couches 15 et 23, étant aussi précisé qu'une ou plusieurs telles poches pourront ou non être disposés dans le fond 29.

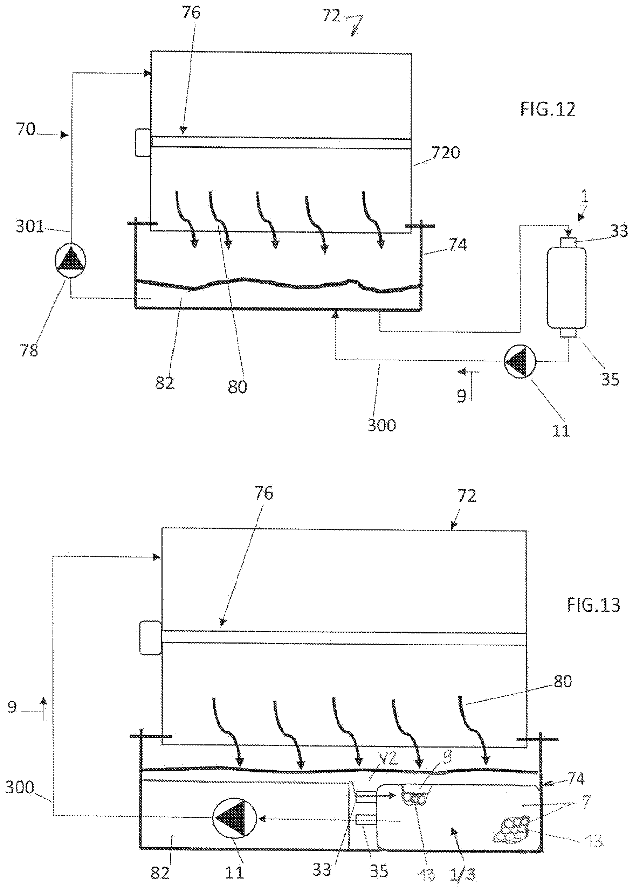

Les figures 12-15 montrent quant à elles l'utilisation opérationnelle d'au moins un bloc modulaire 3 ou d'une unité 1 à plusieurs blocs sur le circuit d'huile 70 d'un moteur 72, étant précisé que l'utilisation de ces blocs ou de l'unité sur un circuit d'eau (ou autre liquide que l'huile) pourra aussi être intéressante, par exemple sur un circuit de refroidissement de moteur, en couplage avec un échangeur gaz(air par ex.)/liquide (eau par ex.) ou liquide (eau douce par ex.)/liquide (eau de mer par ex.).

Le circuit 70 définit ici un chemin de circulation d'huile sur lequel sont disposés, en communication fluide entre eux, un carter d'huile 74 et des organes fonctionnels du moteur à huiler, tel les paliers de bielles et de vilebrequin, mais aussi de l'arbre à cames et son dispositif d'entraînement, 76. Le carter 74, dont la cuve (a priori métallique) est vissée sous le bloc moteur 720, avec un joint d'étanchéité, contient l'huile nécessaire à la lubrification des éléments mobiles du bas moteur et du haut moteur. L'huile y est puisée par la crépine de la pompe à huile 78 qui la distribue sous pression, de préférence via un filtre à huile, aux différents organes (vilebrequin, bielles, arbre à cames...). L'huile peut redescendre ensuite par simple gravité ; flèches 80. Le carter est équipé en son point le plus bas d'une vis de purge avec rondelle d'étanchéité, dédiée à la vidange périodique du moteur.

Trois montages non limitatifs sont plus particulièrement présentés.

Dans le premier, schématisé figure 12, une unité 1, comme celle de la figure 1, assemblée, est raccordée via la connectique 33,35 à la branche 300 du circuit d'huile 70 qui communique avec le bain d'huile 82 du carter 74. La pompe 11 assure la circulation d'huile dans l'unité et la branche 300. Ainsi, le bain d'huile 82 va pouvoir bénéficier d'une huile à température appropriée, en évitant en particulier une température trop basse en hiver (favorable à un démarrage à froid). Une autre pompe 78 prélève de l'huile dans le bain pour la distribuer vers les organes concernés du moteur, via la branche 301 du circuit 70. Cette solution peut être adaptée à une lubrification "par carter sec". L'huile ne sera alors plus contenue dans le carter, mais dans un réservoir indépendant où elle sera directement puisée, avant de passer dans l'unité 1, pour être ensuite acheminée vers les zones à lubrifier, le retour se faisant directement dans le réservoir.

Dans le second montage des figures 13,14, une unité 1 (qui pourra toujours ne comprendre qu'un bloc 3, comme celui de la figure 14), est placée via la connectique d'entrée/sortie de fluide 33,35 directement sur le circuit fermé d'huile 300 qui passe par les organes précités concernés du moteur 72 et le carter 74. La pompe 11 assure la circulation d'huile dans l'unité 1 et tout le circuit 300. L'unité 1 est disposée dans le carter d'huile 74. L'huile passe ainsi du bain 82 dans l'unité 1 d'où elle est prélevée pour circuler vers lesdits organes à huiler. Une telle intégration permet des gains de place, voire de poids et de rendements (potentiellement moins de perte de charge et protection thermique qui peut encore être accrue en isolant la paroi du carter 74).

On aura compris que ci-avant le terme « huile » est à comprendre au sens large, comme « un fluide lubrifiant pour le moteur ». Et on aura aussi noté l'intérêt à ce que le circuit de lubrification du moteur 70 définisse donc un chemin de circulation pour le liquide lubrifiant sur lequel seront disposés les moyens (11 ou 78) de mise en circulation du liquide lubrifiant, le carter 74, les organes fonctionnels (tel 76) du moteur à lubrifier, à placer en échange thermique avec le liquide 9 provenant de l'unité 1, et l'unité 1 contenant au moins le volume 7:
- lequel renferme les éléments 13 de stockage et de restitution ultérieure d'énergie thermique, à matériau MCP, placés en échange thermique avec ledit liquide lubrifiant 9,
- et autour duquel sont donc disposées au moins les première et seconde couches 15,23.

Figure 14, on retrouve le carter 74 dans le volume interne 82 duquel est située la pompe 11 et où est à disposer le bloc 3 dont la chambre 7 est définie à l'intérieur des parois 5 et du fond 29, avec la connectique d'entrée/sortie de fluide 33,35 à brancher directement sur le circuit fermé d'huile. Les orifices 84 du carter permettent son montage sous le bloc-moteur.

Dans le stockeur-échangeur 1 / 3 de ce mode de réalisation, le volume 7 est dépourvu de chicanes (pas de paroi disposée en travers du volume, en particulier). En circulant autour et/ou dans les éléments 13 à matériau MCP qui occupent l'essentiel de ce volume 7, le lubrifiant va échanger thermiquement avec eux.

Latéralement tout autour, mais aussi sous lui (paroi 29) et au-dessus, via par exemple le couvercle 86, le volume 7 est entouré d'un complexe de gestion thermique à couches MCP 15/ isolant thermique 23 et à poches 19, lequel peut être intégré avec les parois ou disposé en doublure.

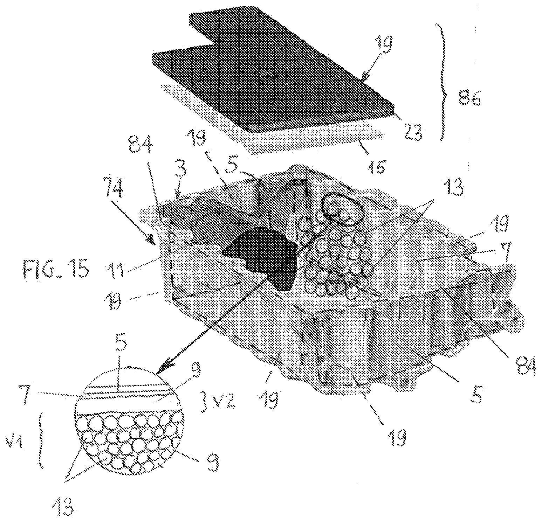

Dans le troisième montage, comme schématisé figure 15, c'est directement le carter 74 de lubrifiant qui définit un bloc modulaire 3. Ainsi, les parois périphériques 5 intégreraient-elles tout ou partie des couches 15/23 enveloppée(s) a priori dans les poches 19 précitées, dans leur version à parois métalliques, manuellement déformables sous pression ambiante. Une alternative avec des parois 5 doublées par tout ou partie desdites couches 15/23 dans cette version à parois métalliques est aussi possible.

Ce carter 74 peut comme précédemment être vissé au bloc moteur, sous lui, et du lubrifiant pourra bien sûr y circuler, une pompe 11 assurant cette circulation et une connectique d'entrée/sortie du lubrifiant prévue.

Au-dessus, entre le carter isolé 74 et la base du bloc-moteur 720, un couvercle 86 peut être disposé/interposé.

L'intérieur du volume 7 dans cette version doit être imaginé comme celui aussi référencé 7 figure 14.

Réaliser un réservoir de lubrifiant de véhicule selon l'une des deux dernières versions ci-avant, donc pouvant permettre de réchauffer du lubrifiant alors que la température extérieure est très froide, par exemple -5 à -10°C, et que le véhicule est à l'arrêt à cette température depuis par exemple 6 à 8 heures était un défi.

Les solutions des figures 13-15 permettront ici de le surmonter.

En effet, le but a été atteint si par rapport aux carters existants, on a pu dans ces versions augmenter le volume interne du carter 74 par exemple de 20 à 40% (typiquement V1 = 2.5 à 4 L et V2= 1 à 2L), avec :
- dans le carter de lubrifiant 74 et circulation de lubrifiant à l'arrêt, lesdits éléments 13 qui baignent dans un premier volume de lubrifiant (V1) à l'extérieur (ici au-dessus) duquel s'étend donc un second volume de lubrifiant (V2) inférieur au premier volume,
- ce sans nécessairement de chicanes 12 dans le volume V1 rempli desdits éléments 13,
- et avec la gestion thermique stricte assurée par le complexe 15/23 sous vide.

En pratique, il sera alors possible d'assurer que, lors d'un démarrage moteur, le(s) MCP(s) desdits éléments 13 soient alors encore chauds : ils auront conservés de la chaleur latente issue de la fin du fonctionnement précédent du bloc moteur pourvu dudit carter de lubrifiant. Le premier volume de lubrifiant (V1) sera donc alors plus chaud que le second (V2), par échange thermique avec les éléments 13 baignant dedans.

Le volume extérieur de lubrifiant (V2) étant inférieur au premier volume (V1), il a pu rendre non nécessaire une multiplication et allongement des zones d'échanges fluides/MCP ; de là l'absence proposée des chicanes 12 figures 14,15.

De la sorte, au moment du démarrage d'un nouveau cycle (après l'arrêt précité par temps froid), par mélange progressif via la circulation dans le circuit, le lubrifiant total en circulation (V1+V2) pourra être rapidement globalement chaud, avec des avantages en termes de rendement du moteur à lubrifier et de limitation des polluants.

## Revendications

1. Bloc modulaire pour une unité (1) de stockage d'une énergie thermique, le bloc comprenant :
- des éléments (13) de stockage et de restitution d'une énergie thermique,
- une chambre (7) de réception desdits éléments (13), la chambre de réception étant définie à l'intérieur de parois (5) extérieures du bloc réunies par un fond (29) fermant d'un côté la chambre, laquelle est ouverte sur un autre côté,
- au moins un passage (30) de communication entre l'extérieur et la chambre, pour permettre de laisser entrer et sortir de ladite chambre un fluide frigorigène ou caloporteur à placer dans la chambre en échange thermique avec lesdits éléments,
- des éléments (15,19,23) de gestion thermique de la chambre, dont certains au moins comprennent au moins une couche d'un matériau isolant thermique (23) et d'autres au moins une couche d'un matériau à changement de phase (MCP,15), et qui sont disposés autour de la chambre,
- ladite au moins une couche de matériau isolant thermique (23) étant disposée dans des poches (19) sous atmosphère contrôlée et à feuilles flexibles (49,53) ou à parois métalliques (490), et
- lesdits éléments (13) de stockage et de restitution d'énergie thermique étant non tubulaires et non disposés de façon organisée dans ladite chambre (7), et/ou lesdits éléments (13) de stockage et de restitution d'énergie thermique étant disposés en vrac dans ladite chambre (7).

2. Bloc modulaire selon la revendication 1, qui comprend en outre une surface (39) de joint entourant le côté ouvert de la chambre, pour assurer une étanchéité vis-à-vis du fluide.

3. Bloc modulaire selon la revendication 1 ou 2, où le matériau MCP (15) est reçu dans au moins une cavité (17) desdites parois extérieures (5), et/ou le matériau MCP est disposé dans lesdites poches (19), avec le matériau isolant thermique (23).

4. Bloc modulaire selon l'une des revendications précédentes, qui comprend une série de dites poches (19) sous atmosphère contrôlée réunies par des portions (21,79) flexibles, intermédiaires entre deux poches successives où celles-ci peuvent s'articuler l'une par rapport à l'autre.

5. Bloc modulaire selon l'une des revendications précédentes, où les feuilles flexibles (49,53) sont sous forme d'un film multicouche comportant des films polymère et de l'aluminium.

6. Bloc modulaire selon l'une des revendications précédentes, où les parois métalliques (490) ont une épaisseur entre 0,07mm et 3mm.

7. Carter de lubrifiant défini par le bloc selon l'une des revendications précédentes et contenant ainsi les éléments (13) de stockage et de restitution d'une énergie thermique, à placer en échange thermique avec un lubrifiant (82) à faire circuler dans ladite chambre (7) via une pompe, en tant que dit fluide frigorigène ou caloporteur.

8. Carter de lubrifiant :
- contenant le bloc selon l'une des revendications 1 à 6, dans lequel les éléments (13) de stockage et de restitution d'une énergie thermique sont à placer en échange thermique avec un lubrifiant (82) à faire circuler dans ladite chambre (7) via une pompe, en tant que dit fluide frigorigène ou caloporteur,
- et dans lequel, circulation de lubrifiant à l'arrêt, lesdits éléments (13) baignent dans un premier volume de lubrifiant (V1) à l'extérieur duquel s'étend un second volume de lubrifiant (V2) inférieur au premier.

9. Ensemble comprenant un bloc moteur (720) auquel le carter de lubrifiant (74) selon la revendication 7 ou 8 est vissé, sous lui, et qui est en communication fluide avec lui.

10. Unité de stockage et de restitution d'une énergie thermique comprenant :
- plusieurs blocs modulaires (3) empilés suivant un axe (27), chacun selon l'une des revendications 1 à 5, lesdites poches (19) sous atmosphère contrôlée et à feuilles flexibles (49,53) isolant les chambres (3) individuellement ou globalement, chaque bloc modulaire (3) comprenant en outre une surface (39) de joint entourant le côté ouvert de la chambre, pour assurer une étanchéité vis-à-vis du fluide, de telle sorte que soit assurée ainsi une étanchéité desdites chambres (7) vis-à-vis du fluide et que deux blocs modulaires (3) successifs de l'empilement puissent être empilées avec leurs chambres (7) indifféremment face à face ou dos à dos,
- des moyens (40) de fixation adaptés pour fixer ensemble les blocs (3),

11. Unité selon la revendication 10, où certaines au moins des poches (19) sous atmosphère contrôlée contenant au moins une dite couche de matériau isolant thermique (23) sont intégrées dans les parois extérieures (5), ou sont disposées autour desdites parois extérieures (5), en étant alors de préférence maintenues par une enveloppe périphérique (38) qui les enserre.

12. Unité selon l'une des revendications 10 ou 11, où les passages de communication (30) traversent les fonds (29) des chambres (7) pour laisser le fluide circuler d'une chambre à une autre, lesdits passages étant décalés d'un passage au suivant parallèlement audit axe, pour définir des chicanes (12) et/ou lesdits éléments (13) de stockage et de restitution d'énergie thermique constituent dans les chambres (7) des obstacles en travers de la circulation axiale (27) dudit fluide frigorigène ou caloporteur,.

13. Unité selon l'une des revendications 10 à 12, où les corps (330) sont empilés ensemble de façon qu'extérieurement lesdites parois extérieures (5) définissent des appuis contre lesquels sont appliqués les poches (19) sous atmosphère contrôlée, lesquelles sont bloquées latéralement par des excroissances (22) qui maintiennent un espace (24) ayant sensiblement l'épaisseur desdites poches (19) sous atmosphère contrôlée, entre les parois extérieures des corps et l'enveloppe périphérique (38).

14. Circuit de lubrification d'un moteur définissant un chemin de circulation d'un lubrifiant sur lequel sont disposés, en communication fluide, des organes fonctionnels (76) du moteur à lubrifier, un carter de lubrifiant (74) définissant ou contenant au moins un bloc (3) selon l'une des revendications 1 à 6 dans lequel le lubrifiant (82) est à faire circuler en tant que dit fluide frigorigène ou caloporteur.

15. Circuit selon la revendication 14 où, dans le bloc (3), circulation de lubrifiant à l'arrêt, lesdits éléments (13) de stockage et de restitution de ladite énergie thermique baignent dans un premier volume de lubrifiant (V1) à l'extérieur duquel s'étend un second volume de lubrifiant (V2) inférieur au premier.

## Patentansprüche

1. Modularer Block für eine Einheit (1) zur Speicherung von Wärmeenergie, wobei der Block enthält:
- Elemente (13) zur Speicherung und Rückgewinnung von Wärmeenergie,
- eine Kammer (7) zum Aufnehmen der Elemente (13), wobei die Aufnahmekammer innerhalb von Außenwänden (5) des Blocks definiert ist, die durch einen Boden (29) miteinander verbunden sind, der die Kammer auf einer Seite verschließt, welche auf einer anderen Seite offen ist,
- zumindest einen Verbindungsdurchgang (30) zwischen dem Außenbereich und der Kammer, um in die Kammer ein Kältemittel bzw. ein Wärmeträgerfluid einströmen und ausströmen zu lassen, das in Wärmeaustausch mit den Elementen in die Kammer einzubringen ist,
- Elemente (15, 19, 23) zum Wärmemanagement der Kammer, von denen zumindest einige zumindest eine Schicht aus einem Wärmedämmmaterial (23) enthalten und weitere zumindest eine Schicht aus einem Phasenwechselmaterial (PCM, 15) enthalten, und die um die Kammer herum angeordnet sind,
- wobei die zumindest eine Schicht aus Wärmedämmmaterial (23) in Taschen (19) unter kontrollierter Atmosphäre und mit biegsamen Bahnen (49, 53) oder mit Metallwänden (490) angeordnet ist, und
- wobei die Elemente (13) zur Speicherung und Rückgewinnung von Wärmeenergie nicht rohrförmig sind und nicht in organisierter Weise in der Kammer (7) angeordnet sind, und/oder die Elemente (13) zur Speicherung und Rückgewinnung von Wärmeenergie lose in der Kammer (7) angeordnet sind.

2. Modularer Block nach Anspruch 1, ferner enthaltend eine Dichtfläche (39), welche die offene Seite der Kammer umgibt, um eine Fluidichtheit sicherzustellen.

3. Modularer Block nach Anspruch 1 oder 2,
wobei
das PCM-Material (15) in zumindest einem Hohlraum (17) der Außenwände (5) aufgenommen ist,
und/oder
das PCM-Material mit dem Wärmedämmmaterial (23) in den Taschen (19) angeordnet ist.

4. Modularer Block nach einem der vorangehenden Ansprüche, enthaltend eine Reihe von Taschen (19) unter kontrollierter Atmosphäre, die über biegsame Abschnitte (21, 79) miteinander verbunden sind, welche zwischen zwei aufeinanderfolgenden Taschen bestehen, wo diese aneinander angelenkt sein können.

5. Modularer Block nach einem der vorangehenden Ansprüche,
wobei
die biegsamen Bahnen (49, 53) in Form einer mehrlagigen Folie vorliegen, die Folien aus Polymer und Aluminium enthält.

6. Modularer Block nach einem der vorangehenden Ansprüche,
wobei
die Metallwände (490) eine Dicke zwischen 0,07 mm und 3 mm haben.

7. Schmierstoffgehäuse, das von einem Block nach einem der vorangehenden Ansprüche definiert wird und somit die Elemente (13) zur Speicherung und Rückgewinnung von Wärmeenergie beinhaltet, die in Wärmeaustausch mit einem Schmierstoff (82) anzuordnen sind, das als Kältemittel bzw. Wärmeträgerfluid über eine Pumpe in der Kammer (7) strömen soll.

8. Schmierstoffgehäuse,
- enthaltend den Block nach einem der Ansprüche 1 bis 6, in welchem die Elemente (13) zur Speicherung und Rückgewinnung von Wärmeenergie in Wärmeaustausch mit einem Schmierstoff (82) anzuordnen sind, das als Kältemittel bzw. Wärmeträgerfluid über eine Pumpe in der Kammer (7) strömen soll,
- und wobei bei angehaltener Schmierstoffströmung die Elemente (13) in einem ersten Schmierstoffvolumen (V1) baden, außerhalb von welchem ein zweites Schmierstoffvolumen (V2) verläuft, das geringer als das erste ist.

9. Anordnung mit einem Motorblock (720), an den das Schmierstoffgehäuse (74) nach Anspruch 7 oder 8 unter diesem angeschraubt ist und der mit diesem in Strömungsverbindung steht.

10. Einheit zur Speicherung und Rückgewinnung von Wärmeenergie, enthaltend:
- mehrere modulare Blöcke (3) nach einem der Ansprüche 1 bis 5, die entlang einer Achse (27) gestapelt sind, wobei die Taschen (19) unter kontrollierter Atmosphäre und mit biegsamen Bahnen (49, 53) die Kammern (3) einzeln oder insgesamt isolieren, wobei jeder modulare Block (3) ferner eine Dichtfläche (39) enthält, die die offene Seite der Kammer umgibt, um eine Fluiddichtheit sicherzustellen, so dass somit eine Fluiddichtheit der Kammern (7) sichergestellt wird und dass zwei aufeinanderfolgende modulare Blöcke (3) der Stapelung mit ihren Kammern (7) beliebig vorderseitig oder rückseitig gegenüberliegend angeordnet werden können,
- befestigungseinrichtungen (40), die dazu geeignet sind, die Blöcke (3) aneinander zu befestigen.

11. Einheit nach Anspruch 10,
wobei
zumindest einige der Taschen (19) unter kontrollierter Atmosphäre, die zumindest eine Schicht aus Wärmedämmmaterial (23) beinhalten, in den Außenwänden (5) integriert sind oder um die Außenwände (5) herum angeordnet sind und dabei vorzugsweise über eine umlaufende Umhüllung (38) gehalten werden, welche diese umschließt.

12. Einheit nach einem der Ansprüche 10 oder 11,
wobei
die Verbindungsdurchgänge (30) die Böden (29) der Kammer (7) durchsetzen, um das Fluid von einer Kammer zur anderen strömen zu lassen, wobei die Durchgänge von einem Durchgang zum nächsten parallel zur Achse versetzt sind, um Prallbleche (12) zu definieren, und/oder die Elemente (13) zur Speicherung und Rückgewinnung von Wärmeenergie in den Kammern (7) Hindernisse für die axiale Strömung (27) des Kältemittels bzw. Wärmeträgerfluids bilden.

13. Einheit nach einem der Ansprüche 10 bis 12,
wobei
die Körper (330) so aneinander gestapelt sind, dass die Außenwände (5) außen Abstützungen definieren, an welche die Taschen (19) unter kontrollierter Atmosphäre angedrückt werden, die seitlich von Vorsprüngen (22) gesichert werden, welche einen Freiraum (24), der im Wesentlichen die Dicke der Taschen (19) unter kontrollierter Atmosphäre hat, zwischen den Außenwänden der Körper und der umlaufenden Umhüllung (38) freilassen.

14. Schmierkreislauf für einen Motor, der einen Schmierstoffströmungspfad definiert, an dem Funktionselemente (76) des zu schmierenden Motors angeordnet sind, wobei ein Schmierstoffgehäuse (74) zumindest einen Block (3) nach einem der Ansprüche 1 bis 6 definiert bzw. beinhaltet, in welchem der Schmierstoff (82) als Kältemittel bzw. Wärmeträgerfluid strömen soll.

15. Kreislauf nach Anspruch 14,
wobei
in dem Block (3) bei angehaltener Schmierstoffströmung die Elemente (13) zur Speicherung und Rückgewinnung von Wärmeenergie in einem ersten Schmierstoffvolumen (V1) baden, außerhalb von welchem ein zweites Schmierstoffvolumen (V2) verläuft, das geringer als das erste ist.

## Claims

1. A modular block for a unit (1) for storing thermal energy, the block including:
- elements (13) for storing and releasing a thermal energy,
- a chamber (7) for receiving said elements (13), the receiving chamber being defined within outer walls (5) of the block joined by a bottom (29) closing on one side the chamber, which is open on another side,
- at least one communication passage (30) between the outside and the chamber, to make it possible to allow in and out of said chamber a refrigerating or heat-transfer fluid to be placed in the chamber in heat exchange relationship with said elements,
- elements (15,19, 23) for the thermal management of the chamber, at least some of which include at least one layer of a thermally insulating material (23) and others at least one layer of a phase change material (PCM, 15), and which are arranged around the chamber,
- said at least one layer of thermally insulating material (23) being arranged in pockets (19) which are under controlled atmosphere and with flexible sheets (49, 53) or metal walls (490), and
- said elements (13) for storing and releasing thermal energy being non-tubular and being not arranged in an organised manner in said chamber (7), and/or said elements (13) for storing and releasing thermal energy being arranged loosely in said chamber (7).

2. A modular block according to claim 1, which further includes a sealing surface (39) surrounding the open side of the chamber, for providing sealing in relation to the fluid.

3. A modular block according to claim 1 or 2, wherein the PCM (15) is received in at least one cavity (17) of said outer walls (5), and/or the PCM is arranged in said pockets (19), with the thermally insulating material (23).

4. A modular block according to one of the preceding claims, which includes a series of said pockets (19) under controlled atmosphere jointed by flexible intermediate portions (21,79) between two successive pockets wherein same may be articulated one in relation to the other.

5. A modular block according to one of the preceding claims, wherein the flexible sheets (49, 53) are in the form of a multilayer film comprising polymer films and aluminium.

6. A modular block according to one of the preceding claims, wherein the metal walls (490) have a thickness between 0.07 mm and 3 mm.

7. A lubricant sump defined by the block according to one of the preceding claims and thus containing the elements (13) for storing and releasing thermal energy, to be placed in heat exchange relationship with a lubricant (82) to be circulated in said chamber (7) via a pump, as said refrigerating or heat-transfer fluid.

8. A lubricant sump:
- containing the block according to one of claims 1 to 6, wherein the elements (13) for storing and releasing thermal energy are to be placed in heat exchange relationship with a lubricant (82) to be circulated in said chamber (7) via a pump, as said refrigerating or heat-transfer fluid,
- and wherein, circulation of lubricant stopped, said elements (13) are immersed in a first volume of lubricant (V1) outside of which extends a second volume of lubricant (V2) smaller than the first one.

9. An assembly including an engine block (720) to which the lubricant sump (74) according to claim 7 or 8 is screwed, below same, and which is in fluid communication therewith.

10. A unit for storing and releasing thermal energy including:
- a plurality of modular blocks (3) stacked along an axis (27), each according to one of claims 1 to 5, said pockets (19) under controlled atmosphere and with flexible sheets (49, 53) insulating the chambers (3) individually or globally, each modular block (3) further including a sealing surface (39) surrounding the open side of the chamber, for providing sealing in relation to the fluid, so that sealing of said chambers (7) is thus provided in relation to the fluid and that two successive modular blocks (3) of the stack can be stacked with the chambers (7) thereof indifferently face to face or back to back,
- attachment means (40) suitable for attaching together the blocks (3),

11. A unit according to claim 10, wherein at least some of the pockets (19) under controlled atmosphere containing at least one said layer of thermally insulating material (23) are integrated into the outer walls (5), or are arranged around said outer walls (5), being therefore preferably retained by a peripheral envelope (38) that surrounds same.

12. A unit according to one of claims 10 or 11, wherein the communication passages (30) pass through the bottoms (29) of the chambers (7) to allow the fluid to circulate from one chamber to another, said passages being offset from one passage to the next parallel to said axis, to define baffles (12) and/or said elements (13) for storing and releasing thermal energy constitute in the chambers (7) obstacles through the axial circulation (27) of said refrigerating and heat-transfer fluid.

13. A unit according to one of claims 10 to 12, wherein the bodies (330) are stacked together so that externally said outer walls (5) define supports against which are applied the pockets (19) under controlled atmosphere, which are laterally blocked by protrusions (22) that maintain a space (24) having substantially the thickness of said pockets (19) under controlled atmosphere, between the outer walls of the bodies and the peripheral envelope (38).

14. A circuit for lubricating an engine defining a path of circulation of a lubricant whereon are arranged, in fluid communication, functional components (76) of the engine to be lubricated, a lubricant sump (74) defining or containing at least one block (3) according to one of claims 1 to 6 wherein the lubricant (82) is to be circulated as said refrigerating or heat-transfer fluid.

15. A circuit according to claim 14 wherein, in the block (3), circulation of lubricant stopped, said elements (13) for storing and releasing said thermal energy are immersed in a first volume of lubricant (V1) outside of which extends a second volume of lubricant (V2) smaller than the first one.
